# EUROPEAN PATENT APPLICATION

(11) **EP 3 534 313 A1**
(43) Date of publication of application: **04.09.2019**
(21) Application number: 18159589.3
(22) Date of filing: 01.03.2018
(51) Int. Cl.: G06Q 20/20, G06Q 20/32, G06Q 20/34

(54) **PAYMENT DEVICE WITH TOUCH SCREEN**

(71) Applicant: Mastercard International Incorporated, Purchase NY 10577 (US)
(72) Inventor: MUSHING, Alan, Wincham, Essex CW9 6PX (GB); SYLVESTER, Dave, Brentwood, Essex CM14 5DD (GB)
(74) Representative: Lawrence, Richard Anthony

(57) **Abstract**

A dedicated transaction device 6 is described. The device comprises a processor; a memory; and a touch screen display 41 for providing a user interface for the computing device. The memory holds a transaction application. The processor is adapted to perform the transaction application and therein obtain user input from the touch screen display 41 in staging a transaction. A method of staging a transaction using such a device is also described.

## Description

### Field of Disclosure

The present disclosure relates to a payment device with a touch screen. In embodiments, the disclosure relates to a payment device adapted to stage transactions using user interaction.

### Background of Disclosure

Payment cards such as credit cards and debit cards are very widely used for all forms of financial transaction. The use of payment cards has evolved significantly with technological developments over recent years. Originally, transactions were on paper, using an imprint of a transaction card and confirmed by a signature. This approach was largely replaced by use of a magnetic stripe of a transaction card swiped through a magnetic stripe reader on a point of sale (POS) terminal to perform a transaction. Transaction cards developed to contain an integrated circuit ("chip cards" or "smart cards") that communicates with a smart card reader in the POS terminal. Using this approach, a transaction is typically confirmed by a personal identification number (PIN) entered by the card user. Cards of this type typically operate under the EMV standard for interoperation of chip cards and associated apparatus (such as POS terminals and ATMs). ISO/IEC 7816 provides a standard for operation of cards of this type. EMV standard specifications are managed by EMVCo for relevant industries, and can be found at https://www.emvco.com/document-search/.

Technology has further developed to provide payment cards which operate contactlessly - under EMV, these are covered under the ISO/IEC 14443 standard. Using such cards, the primary account number (PAN) can be read automatically from the card by a POS terminal using NFC protocols - this approach is generally referred to as "contactless" or "proximity" payment. This is typically enabled by embedding of an NFC chip in a card body together with a suitable antenna to allow transmission and receipt of wireless signals - the transmissions may be powered by a magnetic inductive field emitted by a proximity reader in the POS terminal. For an effective transaction to be made; the payment card may need to be brought into close proximity to the proximity reader - EMVCo has defined this range under the Level 1 operating volume range of 0-4cm.

Contactless payment with payment cards is quick and convenient for the user, but is relatively inflexible because of the limited nature of the interaction, and in particular because the user's interaction with the payment card is limited to physical control. It is now also possible to use a computing device such as a consumer mobile device as a proxy for a payment card - typically this will be a user smartphone running a mobile payment application and with access to user credentials. Such a mobile payment application will typically be securely provisioned to a consumer mobile device (hereafter "mobile phone") to act as a proxy for a payment card using NFC technology standards, which are built in to many current mobile phones. Using such an application, the user can conduct 'tapping based' transactions against a proximity reader, as well as perform account management operations over an appropriate network interface (cellular, local wireless network) in an online banking interface with the user's account provider. A user may now commonly use his or her mobile phone in obtaining banking services. While other payment technologies for mobile use exist, the present applicant uses an HCE (host card emulation) solution MCBP (MasterCard Cloud Based Payments), MasterPass and DSRP (Digital Secure Remote Payment) in support of contactless payment by mobile phone.

While use of a mobile phone as a payment device provides some significant benefits, it does also lead to different design choices. The security model in a physical card and a mobile phone is necessarily different. A physical card is a low cost device designed for a single purpose - acting for the cardholder in a transaction process - whereas a mobile phone is a general purpose computing device running a number of different applications. Typically a physical card can use a discrete physically and logically protected secure element to hold sensitive data or to perform sensitive parts of a process (so that, for example, cryptographic processes may be carried out within a secure element with the results exported outside), whereas this may not be practical in general purpose mobile phone design. A mobile phone is a high cost multipurpose device, so hardware customisation of the computing environment is not practical.

It would be desirable to enable a user to have access to a range of enhancements to the transaction process as is currently possible using a mobile phone as payment device while also having access to the simplicity and customisation achievable with a dedicated payment device such as a payment card.

### Summary of Disclosure

In a first aspect, the disclosure provides a dedicated transaction device, comprising: a processor; a memory; and a touch screen display for providing a user interface for the computing device; wherein the memory holds a transaction application, wherein the processor is adapted to perform the transaction application and therein obtain user input from the touch screen display in staging a transaction.

This combination of functionalities allows the user the same ease of interaction as with a mobile phone but with the simpler use model and security benefits of using a dedicated device.

In embodiments, the device further comprises a secure element that is protected from subversion physically, logically, or both physically and logically, and wherein the secure element is adapted for holding secure data or performing secure processes required by the transaction application. This security benefit, which is not practical to achieve in the context of a mobile phone because it is not a dedicated device, provides the user with a high level of security.

In embodiments, the device is adapted to display an optical code in staging the transaction. This optical code may be a QR code. In embodiments, the device is adapted to communicate with a terminal of a transaction system only by optical code. A device adapted only to function in this way could be particularly resistant to subversion, as it would not be open to subversion by wireless communication.

In other embodiments, the device may comprise short range wireless communication means. In such cases, the device may be adapted to communicate with a terminal of a transaction system by an NFC protocol using the short range wireless communication means.

In embodiments, the device has height and width, but not thickness, determined by ISO/IEC 7810. This may enable the device to be kept with the user's payment cards, but if the device is not limited by the ISO/IEC thickness restriction it may be able to have much greater battery life.

The dedicated transaction device may be a dedicated payment device. If so, it may be adapted to stage a transaction according to EMV protocols.

In a second aspect, the disclosure provides a method of staging a transaction using a dedicated payment device as described above, the method comprising: the user interacting with the touch screen display to perform an action to confirm that he or she is physically present; and the processor displaying an optical code on the touch screen display for reading by a terminal of a transaction system, wherein information from the user's interaction with the touch screen display is included in the optical code.

The user may first activate the payment device to stage the transaction. The user interacting with the touch screen may comprise the user entering a PIN code on the touch screen. The optical code may be a QR code. The transaction may be staged according to EMV protocols.

### Brief Description of Figures

Embodiments of the disclosure will now be described, by way of example, with reference to the accompanying Figures, of which:
Figure 1 shows schematically a transaction system using the four-party model;
Figure 2 shows an implementation of the transaction system of Figure 1 adapted for performing embodiments of the disclosure;
Figures 3A and 3B show, respectively, functional elements of a user computing device and a terminal device for use in the transaction system implementation of Figure 2;
Figure 4 shows an exemplary payment device according to an embodiment of the invention; and
Figure 5 illustrates steps in performance of a transaction using the payment device of Figure 4 according to one use model.

### Description of Specific Embodiments

General and specific embodiments of the invention will be described below with reference to the Figures.

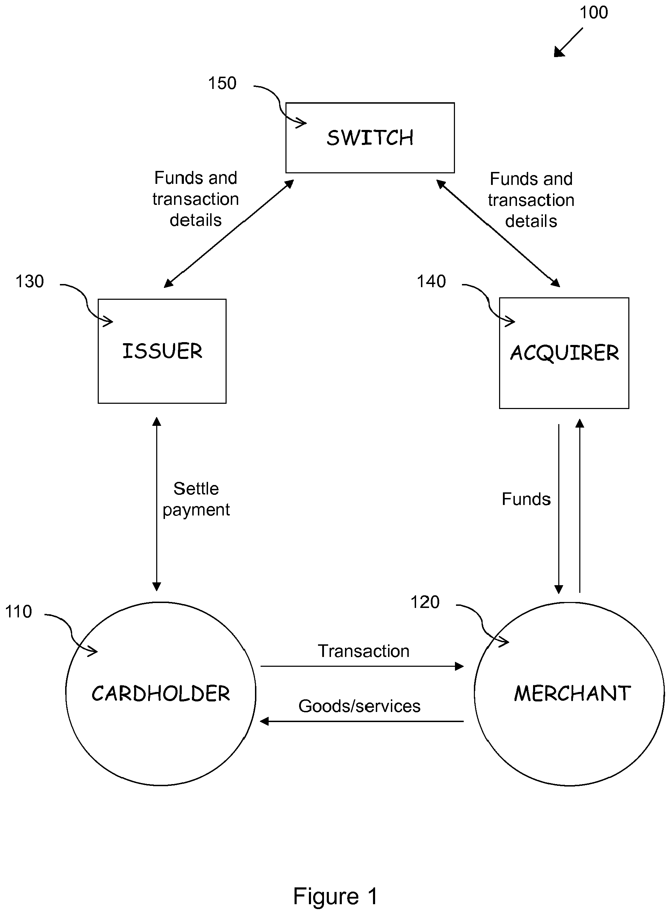

Figure 1 is a block diagram of a typical four-party model or four-party payment transaction scheme. The diagram illustrates the entities present in the model and the interactions occurring between entities operating in a card scheme.

Normally, card schemes - payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120.

The model also comprises a central switch 150 - interactions between the issuer 130 and the acquirer 140 are routed via the switch 150. The switch 150 enables a merchant 120 associated with one particular bank acquirer 140 to accept payment transactions from a cardholder 110 associated with a different bank issuer 130.

A typical transaction between the entities in the four-party model can be divided into two main stages: authorisation and settlement. The cardholder 110 initiates a purchase of a good or service from the merchant 120 using their card. Details of the card and the transaction are sent to the issuer 130 via the acquirer 140 and the switch 150 to authorise the transaction. Should the transaction be considered abnormal by the issuer 130, the cardholder 110 may be required to undergo an additional verification process to verify their identity and the details of the transaction. Once the additional verification process is complete the transaction is authorised.

On completion of the transaction between the cardholder 110 and the merchant 120, the transaction details are submitted by the merchant 120 to the acquirer 140 for settlement.

The transaction details are then routed to the relevant issuer 130 by the acquirer 140 via the switch 150. Upon receipt of these transaction details, the issuer 130 provides the settlement funds to the switch 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

In practical implementations of a four-party system model, the roles of a specific party may involve multiple elements acting together. This is typically the case in implementations that have developed beyond a contact-based interaction between a customer card and a merchant terminal to digital implementations using proxy or virtual cards on user computing devices such as a smart phone.

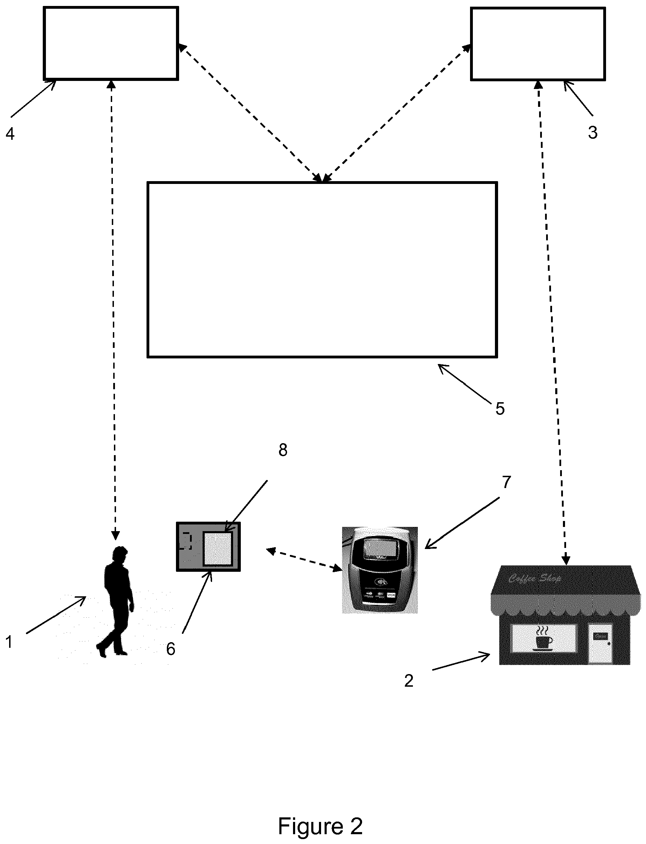

Figure 2 shows an architecture according to an embodiment of the disclosure appropriate for interaction between a user payment device and a merchant point of sale (POS) terminal.

The cardholder 1 has a user payment device 6 as will be described further below - the user payment device has a touchscreen display 8. This payment device 6 has a processor and memory and the functionality to stage a transaction, but it will typically not be adapted for contact with a merchant POS terminal 7 of a merchant 2, and so need not have a conventional credit card form factor. The payment device 6 does however have some means for at least conveying information to the merchant POS terminal 7 - this may be through the touchscreen display 8, for example by display of an optical code such as a QR code, or may be by NFC as for a conventional contactless transaction.

The transaction infrastructure 5 provides the computing infrastructure necessary to operate the card scheme and provide routing of transactions and other messaging to parties such as the acquirer 3 and the issuer 4.

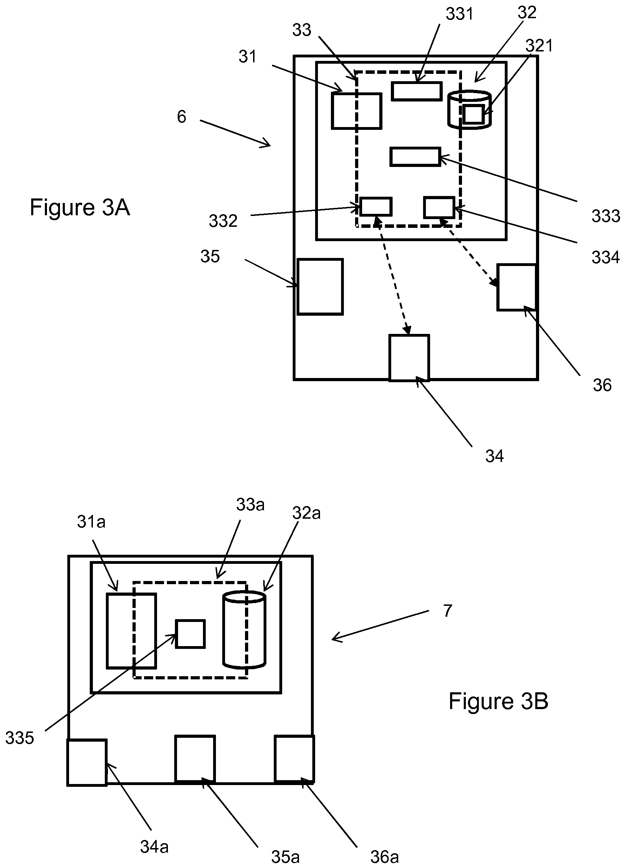

Figures 3A and 3B illustrate schematically by function a user payment device and a merchant POS device in accordance with embodiments of the disclosure. Other elements of the architecture of Figure 2 may be organised in an essentially conventional manner for an EMV transaction architecture.

Figure 3A shows a user payment device 6. The payment device 6 possesses at least one processor 31 and at least one memory 32, between them defining a computing environment 33 for performance of applications. Applications running in the computing environment include a proximity payment system environment 331 and may include other applications such as a wallet application 333 and a biometric application 334. A user interface application 332 supports provision of user input from and display output to a touchscreen user interface 34. The memory in embodiments described may comprise a physically and logically protected environment 321 for protection of sensitive data required by these applications - such secure environments may be implemented in a variety of ways (as the skilled person will appreciate) and are not shown explicitly here, but access to secure data handling is desirable for a proximity payment system environment as well as for both a wallet application and a biometric application. Alternatively, the whole computing environment 33 may be designed to be physically and logically protected. The payment device 6 may in embodiments be adapted for wireless communication (for example short range wireless communication using NFC), in which case it will have a wireless communication system 35. The payment device here also has a biometric sensor, in this case fingerprint reader 36.

Figure 3B shows a mobile POS terminal 7 adapted to implement an embodiment of the disclosure. The mobile POS terminal 7 also possesses at least one processor 31a and at least one memory 32a, between them defining a computing environment 33a for performance of applications. The applications here include a point of sale (POS) application 335 using an optical code reader 34a for reading optical output from a user payment device 6 and a wireless communication interface 35a for making an NFC or other wireless connection with a user payment device 6, together with a user interface 36a (other communication options may also be provided, such as typically a connection to other networked devices within the wider network architecture, and there may also be a contact interface though this is not discussed further as the embodiments discussed in detail below are contactless). Relevant features of the POS application 335 will be described in relation to the use case discussed below.

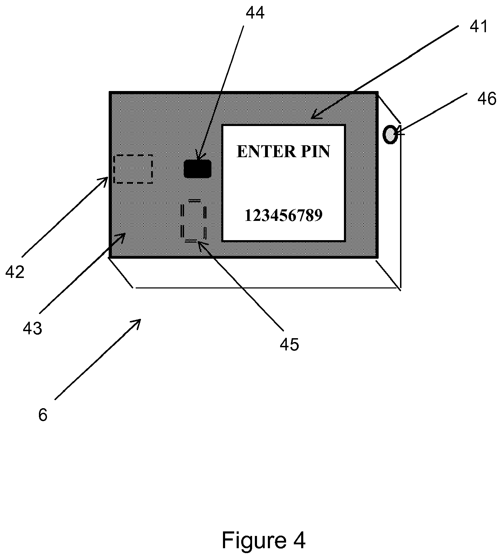

Figure 4 shows an embodiment of a payment device 6 according to the disclosure. The payment device has a touchscreen display 41 and an embedded chip 42 comprising a processor and a memory - the embedded chip is here provided with a physical protection layer 43 to prevent tampering, though in other embodiments other mechanisms may be used to ensure that the embedded chip 42 is physically or logically protected from tampering (or both). In this case the payment device is powered by a battery 44, though in embodiments the payment device may be inductively powered, or the battery 44 may be inductively charged.

As can be noted from Figure 4, in this embodiment the payment device 6 is not a contact device and so has no surface contact pattern allowing electrical contact to the embedded chip 42. This means that there is no need for the payment device 6 to use the standardized credit card form factor, as there is no need for the payment device 6 to fit into a credit card sized slot on a terminal device to make a contact connection with it. In practice, it may be desirable for the payment device to have the same or similar height and width as a standardized credit card (this is defined by the ISO/IEC 7810 standard defining physical characteristics of identification cards - ID-1 sets out the form factor used by credit cards), but to have a greater thickness to allow room for a touchscreen display and a battery. The payment device will then be sized appropriately for use with contactless terminals, but will have sufficient volume to house the components needed for its preferred functionality - it may also be able to benefit from this form factor in other ways (for example, it may still fit in a credit card dimensioned slot in the user's physical wallet).

This approach allows for consumer interaction with the payment device 6 in a way that is not possible with a conventional payment card. Such interaction is possible with a user mobile phone used as a payment device, but this requires the user to have a suitable mobile phone available able to run the required mobile payment application, and as will be discussed below security considerations may then arise that may be avoidable using payment devices according to embodiments of the disclosure. The presence of a touchscreen 41 allows the user to make user input during the transaction process, for example by performing a cardholder verification action (such as entry of a PIN or provision of a biometric) or by providing an element of the transaction (such as price, or a change to price such as a gratuity). The touchscreen also allows display to the user, so for example the user may be provided with a visual indication of transaction progress or action status.

This embodiment shows a single embedded chip 42, though in other embodiments this functionality may be provided by multiple components. In embodiments with a physical protection layer 43, this may enclose some or all of such multiple components. Where a computing element is physically protected in this way, it can be used as a trustably secure element that can be treated as protected against physical or logical subversion, such that secrets held within a memory the secure element (such as cryptographic keys and user secrets) and processes carried out within a processor of the secure element (such as cryptographic processes) may be trusted to a significantly greater degree than secrets and processes in an unprotected computing environment could be. This allows for use of a simple security model - based on an assumption that secrets and processes in the secure element will not be discovered or subverted - that will not generally be available in a mobile phone computing environment, as secure elements other than a SIM card (which is typically specified by a cellular telephone system operator and not available for use by other proprietary applications) are typically not present in this environment, and equivalence to secure elements is typically only achieved by virtualisation processes and involvement of third parties through a communication infrastructure.

A short range wireless antenna 45 is shown in Figure 4 in dotted lines. This is present in some embodiments, allowing for short range wireless communication using NFC protocols - in such embodiments the payment device 6 may be used for conventional contactless transactions with merchant POS terminals. In other embodiments, there is no short range wireless antenna 45 - in such cases the payment device 6 may be adapted to provide an optical code (such as QR code) for reading by a suitably configured merchant POS terminal 7 to initiate a transaction - a use model illustrating this approach is set out below. In embodiments, the payment device 6 may be adapted to support either transaction mode - for example, the payment device 6 may be adapted to interact with a merchant POS terminal 7 by QR code if the merchant POS terminal is adapted to support QR based transactions, but instead to interact by NFC as for a conventional contactless transaction if the merchant POS terminal does not support QR based transactions.

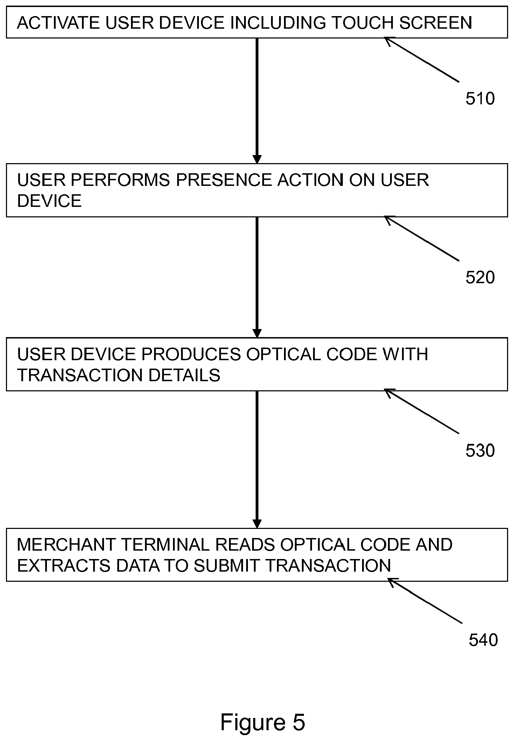

As noted above, this device is particularly suitable for staging transactions by QR code or other optical code. One potential use model is that described in Figure 5. The transaction may begin with a merchant action, such as the merchant entering details of a transaction so that these details then appear on the display of a QR-enabled merchant POS terminal. The user may activate 510 his or her payment device to stage this transaction on the payment device, this activation being, for example, by pressing an activation button 46 to power up the transaction device. In particular, this action may be used to power up the touch screen display 41. It will be desirable to maximise battery life if the device is adapted for minimal battery consumption outside periods of use to perform a transaction. The user then performs 520 an action to confirm that he or she is physically present, such as entry of a PIN into the payment device or a biometric input if a biometric sensor is present. The payment device is adapted to use this material, encoded as for an EMV transaction, along with other card details to produce 530 an optical code such as a QR code that contains these and other details of the payment device encoded within it. This optical code is then read 540 by a QR code reader associated with a merchant POS terminal (not shown). The merchant POS terminal will extract information needed to complete the transaction from the QR code. The user can then indicate - for an example by pressing a button displayed on the screen alongside the QR code - that the QR code has been read. The device may be switched off at this point, or modifications could be made to existing protocols such that the merchant POS could provide an indication of transaction success to the payment device. This could be done, for example, by indicating that the user should make a further tap to upload an acknowledgement.

As the person skilled in the art will appreciate, modifications and variations to the above embodiments may be provided, and further embodiments may be developed, without departing from the spirit and scope of the disclosure. Reference to standards and proprietary technologies are provided for the purpose of describing effective implementations, and do not limit the scope of the disclosure.

## Claims

1. A dedicated transaction device (6), comprising:
a processor;
a memory; and
a touch screen display (41) for providing a user interface for the computing device;
wherein the memory holds a transaction application, wherein the processor is adapted to perform the transaction application and therein obtain user input from the touch screen display (41) in staging a transaction.

2. The dedicated transaction device of claim 1, wherein the device further comprises a secure element (42) that is protected from subversion physically, logically, or both physically and logically, and wherein the secure element (42) is adapted for holding secure data or performing secure processes required by the transaction application.

3. The dedicated transaction device of claim 1 or claim 2, wherein the device is adapted to display an optical code in staging the transaction.

4. The dedicated transaction device of claim 3, wherein the optical code is a QR code.

5. The dedicated transaction device of claim 3 or claim 4, wherein the device is adapted to communicate with a terminal of a transaction system only by optical code.

6. The dedicated transaction device of any of claims 1 to 4, further comprising short range wireless communication means.

7. The dedicated transaction device of claim 6, wherein the device is adapted to communicate with a terminal of a transaction system by an NFC protocol using the short range wireless communication means.

8. The dedicated transaction device of any preceding claim, wherein the device has height and width, but not thickness, determined by ISO/IEC 7810.

9. The dedicated transaction device of any preceding claim, wherein the dedication transaction device is a dedicated payment device.

10. The dedicated transaction device of claim 9, wherein the dedicated payment device is adapted to stage a transaction according to EMV protocols.

11. A method of staging a transaction using a dedicated payment device as claimed in claim 1, the method comprising:
the user interacting with the touch screen display (41) to perform an action to confirm that he or she is physically present; and
the processor displaying an optical code on the touch screen display (41) for reading by a terminal of a transaction system, wherein information from the user's interaction with the touch screen display (41) is included in the optical code.

12. The method of claim 11, wherein the user first activates the payment device to stage the transaction.

13. The method of claim 11 or claim 12, wherein the user interacting with the touch screen comprises the user entering a PIN code on the touch screen.

14. The method of any of claims 11 to 13, wherein the optical code is a QR code.

15. The method of any of claims 11 to 14, wherein the transaction is staged according to EMV protocols.
